# EUROPEAN PATENT SPECIFICATION

(11) **EP 1 783 634 B1**
(45) Date of publication and mention of the grant of the patent: **05.05.2010**
(21) Application number: 05292308.3
(22) Date of filing: 02.11.2005
(51) Int. Cl.: G06F 17/30, H04L 29/08

(54) **Method and apparatus for managing and/or retrieving information relating to a user**
Verfahren und Vorrichtung zum Verwalten und/oder Abrufen von Informationen bezüglich eines Benutzers
Méthode et procédé pour la gestion et/ou l'extraction de données relatives à un utilisateur

(43) Date of publication of application: 09.05.2007
(73) Proprietor: SAP AG, 69190 Walldorf (DE)
(72) Inventor: Gomez, Laurent, 006110 Le Cannet (FR)
(74) Representative: Müller-Boré & Partner Patentanwälte

(56) References cited:
- WO-A-01/57615
- GB-A- 2 364 408
- US-B1- 6 463 533

## Description

### FIELD OF THE INVENTION

The present invention relates to the field of client-server communication. In particular, the present invention relates to the management retrieval of information relating to a user in client-server communication.

### BACKGROUND AND STATE OF THE ART

A protocol widely used for client-server communication today is the Hypertext Transfer Protocol (HTTP).

The HTTP protocol is a request/response protocol. A client sends a request to the server in the form of a request method, URL, and protocol version, followed by a MIME-like message containing request modifiers, client information, and possible body content over a connection with a server. The server responds with a status line, including the message's protocol version and a success or error code, followed by a MIME-like message containing server information, entity meta-information, and possible entity-body content.

Most HTTP communication is initiated by a user agent, such as a web-browser, and consists of a request to be applied to a resource on some origin server.

A detailed account of the HTTP protocol is given in RFC 2616.

HTTP servers respond to each client (user agent or web-browser) request without relating that request to previous or subsequent requests, i.e. communication is generally 'stateless'. In order to allow for the management of state information within the framework of the HTTP protocol, the protocol has been supplemented with a mechanism to manage small pieces of information, known under the name of 'cookies'.

The state information stored in a cookie is generated by an origin server and sent to a user agent. The user agent stores the cookie, that is associated to a particular web server, on the client computer. The user agent returns that information to the server upon request.

Cookies can be used for user's authentication to a web-based application such as web-based email application or a discussion forum. Subsequently, the cookie may be used to personalize the web-based application and the provided services according to the user's preferences.

A detailed account of the HTTP state management mechanism based on cookies is given in RFC 2109.

Software solutions such as RoboForm (http://www.roboform.com) or the Mozilla Password Manager (http://www.mozilla.org/projects/security/pki/psm/help_21/using_priv_help.html#pass words_manage) aid the user in remembering his password. When the user is surfing the web, he typically has to remember different user names and passwords. Those solutions handle all different user names and passwords and ask the user to remember a single user name and password.

Opera (http://opera.com/supportltutorials/flash/wand), a further software solution, proposes the Wand, a password manager. Wand associates in a cookie only one login/password pair and only one set of personal data to a web-based service.

Only one cookie is associated to a web-based application related to a specific URL. However, a user can use a same web-based application under different identities. For example, he can have several mail accounts on a web-based mail service. Each time the user would like to get access to his different mail accounts, he has to enter his login and password for the specifc mail account he would like to access.

GB 2 364 408 A discloses web browser cookie management for different personas associated with a user. Cookie data for a specific user is segmented by persona, with each defined user persona having a separate cookie data repository containing only cookies for that persona.

WO 01/57615 discloses a method and apparatus for controlling tracking activities on networks. A user may use different roles for his online activities, the roles being associated with a particular set of topics or areas of interest. A cookie manager maintains multiple sets of persistent information such that each role has a separate set of persistent information or cookies associated with it.

### SUMMARY OF THE INVENTION

It is therefore an object of the present invention to provide an improved method and apparatus for managing information related to a user.

This aspect is achieved by a method for managing information related to a user according to independent claim 1, a computer readable storage medium according to claim 7, a computer program product according to claim 8, and an apparatus for managing information related to a user according to independent claim 9.

A method for managing information related to a user in a client-server environment may comprise a client computer and a server computer, wherein the client computer executes the steps of
- receiving a first cookie sent from a server computer related to a web-based service or web server or server computer;
- storing the first cookie related to the web-based service;
- receiving at least one further cookie sent from the server computer related to the same web-based service as the first cookie relates to; and
- storing the at least one further cookie related to the same web-based service.
   A cookie may be associated to web-server and stored in client device. A cookie may permit to store user-related information and can be used for user authentification to a web-based application.
   The first cookie defines a first identity and the at least one further cookie defines at least one further identity, respectively. The cookies may be stored in a database of a cookie-managing component for managing cookies.
   Thus the method permits to store more than one cookie related to the same web-based application or service.
   The method may comprise the step of providing each cookie related to the same web-based service with a label. Moreover, the step of providing each cookie related the same web-based service with a label may comprise a step of receiving the label form the user.
   The cookies related to the same web-based service are stored in a list. Each list related to a web-based service may be identified by the URL of the web-based service or application.
   The step of storing the first cookie may comprise a step of creating a new list for the web-based service the first cookie is related to. Moreover, the step of storing the at least one further cookie may comprise for each cookie the step of creating a new entry in the list for the web-based service.
   The method may further comprise the steps of
- receiving from a server computer related to a web-based service a request for a cookie;
- retrieving the stored cookies related to the web-based service;
- displaying the retrieved cookies related to the web-based service for selection to the user;
- receiving a selection of a cookie from the user;
- sending the selected cookie to the server computer.

By displaying the cookies stored for a particular web-based service, the user can select which identity he would like to use for the particular session.

A method for retrieving information related to a user in a client-server environment may comprise a client computer, in particular using a cookie-managing component, and a server computer, wherein at least two cookies related to the same web-based service are stored in the client computer and the client computer executes the steps of
- receiving a request for a cookie sent from a server computer related to a web-based service;
- retrieving the stored cookies related to the web-based service;
- displaying the retrieved cookies related to the web-based service for selection to the user;
- receiving a selection of a cookie from the user;
- sending the selected cookie to the server computer.

By displaying the cookies stored for a particular web-based service, the user can select which identity he would like to use for the particular session. Thus, the user can have more than one identity for the same web-based service and does not need to input the login and password when he visits the web-based service a further time.

The cookies may be provided with a label and the step of displaying the retrieved cookies comprises a step of displaying the label related to the cookie.

A web-based service may be identified by its URL (Uniform Resource Locator, or Universal Resource Locator).

The web-based service is a web-based email application or a web-based forum.

A computer-readable storage medium may store a computer program containing computer readable instructions which, when loaded and executed in a suitable client/server environment, for example comprising a client and a server computer, perform a method as described above.

A computer program product may contain computer readable instructions which, when loaded and executed in a suitable client/server environment, for example comprising a client and a server computer, perform a method as described above.

An apparatus for managing information related to a user, may comprise:
- a web browser;
- a cookie managing component or unit for managing cookies,
wherein the cookie-managing component comprises:
- a receiving/sending component for receiving a first cookie, defining a first identity, sent from a server computer related to a web-based service or web server or server computer and at least one further cookie, defining a further identity, sent from the server computer related to the same web-based service as the first cookie;
- a memory for storing the first cookie related to the web-based service, in particular in a database of the cookie-managing component for managing cookies, and for storing the at least one further cookie related to the same web-based service, in particular in the database of the cookie-managing component.

The receiving/sending component may be adapted for receiving from a server computer related to a web-based service a request for a cookie; the cookie-managing component may be adapted for retrieving the stored cookies related to the web-based service, displaying the retrieved cookies related to the web-based service for selection to the user and receiving a selection of a cookie from the user; and the receiving/sending component may be adapted for sending the selected cookie to the server computer.

An apparatus for retrieving information related to a user, may comprise
- a web browser;
- a cookie managing unit or component for managing cookies,
wherein the cookie-managing component comprises:
- a memory for storing a first cookie related to a web-based service, in particular in a database of the cookie-managing component for managing cookies, and for storing the at least one further cookie related to the same web-based service, in particular in the database of the cookie-managing component; and
- a receiving/sending component for receiving from a server computer related to a web-based service a request for a cookie;
wherein
- the cookie-managing component is adapted for retrieving the stored cookies related to the web-based service, displaying the retrieved cookies related to the web-based service for selection to the user and receiving a selection of a cookie from the user; and
- the receiving/sending component is adapted for sending the selected cookie to the server computer.

Moreover, the cookies related to the same web-based service are stored in a list.

### SHORT DESCRIPTION OF THE FIGURES

Further objects, aspects and advantages of the present invention will become apparent to the person skilled in the art when studying the following detailed description, in connection with the annexed drawings, in which
- Fig. 1: shows an example of a client-server environment with a client device according to the invention;
- Fig. 2A: shows a schematic representation of a method for managing information related to a user according to an example of the present invention;
- Fig. 2B: shows detailed representation of the step of adding a cookie of Fig. 2A;
- Fig. 3A: shows a schematic representation of a method for retrieving information related to a user according to an example of the present invention;
- Fig. 3B: shows detailed representation of the step of selecting a cookie of Fig. 3A;
- Fig. 4: shows an exemplary display view when applying the method of Fig. 3A.

### DETAILED DESCRIPTION

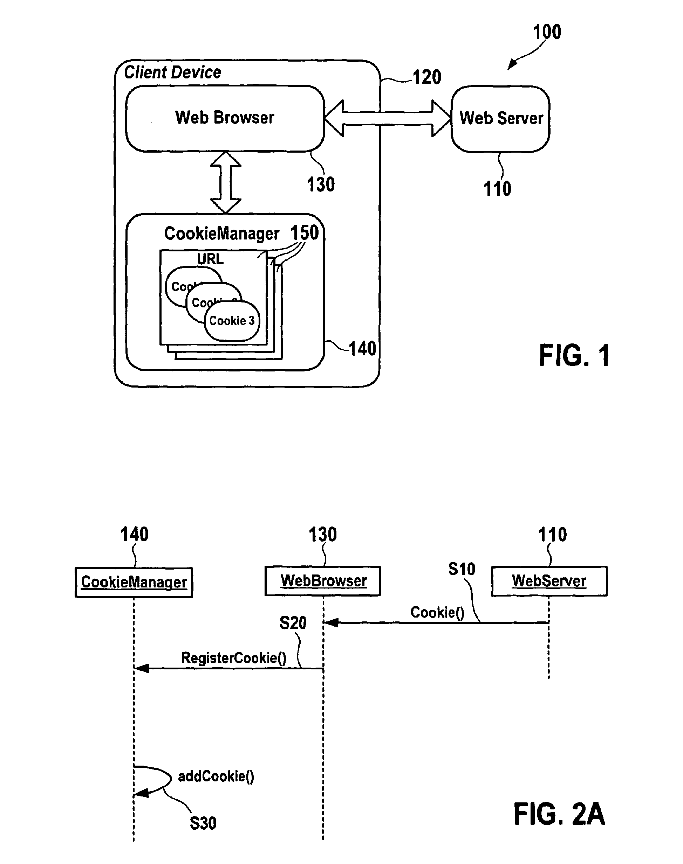

Fig. 1 shows an example of a client-server environment 100. The client-server environment 100 may comprise a web server 110 and a client-device 120 such as a PC. The web server 110 and the client device 120 are able to communicate over an arbitrary network connection, in particular a mono-, bi- or multi-directional connection), such as the Internet (not shown). The client device 120 may comprise a web browser 130, and a cookie manager or cookie managing component 140.

The web server 110 may be a computer or computer program that is responsible for accepting HTTP requests from clients, which are known as web browsers, and serving them web pages, which are usually HTML documents. In particular, a web server may be a computer, including software package, that provides a specific kind of service to client software running on other computers. More specifically, a server is a computer that manages and shares web based applications accessible anytime from any computer connected to the Internet.

A web server program may operate by accepting and handling HTTP requests from the network, and providing an HTTP response to the requester. The HTTP response typically consists of an HTML document, but can also be a raw text file, an image, or some other type of document. Web servers may also have the capability of logging some detailed information, about client requests and server responses, to log files; this allows the Web master to collect statistics by running log analyzers on log files. Web servers may translate the path component of a Uniform Resource Locator (URL) into a local file system resource.

The web browser 130 may be a program used to access the Internet services and resources available through the World Wide Web. In particular, a web browser may be a client program that initiates requests to a Web server and displays the information that the server returns.

The web browser 130 may send requests to the web server 110 over the arbitrary network connection. Upon request of a web browser 130, the web server 110 sends back a reply.

The cookie manager 140 may be a component or code portion which is executed in the client device 120 for performing a the method steps a described below.

The cookie manager 140 communicates with the web browser 130. The cookie manager 140 may be part of the web browser 130. Moreover, the cookie manager 140 may be implemented as a plug-in, which can be used with any kind of web-browser 130. Moreover, the cookie manager 140 may be used by any web-based service requiring a user's authentication.

The cookie manager 140 can store cookies relating to different web-based applications or web servers. In particular, more than one cookie relating to the same web-based application can be stored in the cookie manager 140. Thus a user can e.g. have a plurality of identities for the same web-based application. The cookies relating to the same web-based service may be stored in a list 150 for each web-based service. In the cookie manager 140 each web-based service may be identified by its URL (Uniform Resource Locator, or Universal Resource Locator).

The cookie may be exemplarily embodied as a HTTP cookie (also called HTTP magic cookie) may be a packet of information sent by a server to a World Wide Web browser and then sent back by the browser each time it accesses that server.

Cookies can contain any arbitrary and/or defined information the server chooses or defines and are used to introduce state (which may be regarded as an at least partial or complete set of properties transmitted by an object to an observer via one or more channels; substantially any change in the nature or quantity of such properties in a state may be detected by the observer and thus a corresponding transmission of information and/or setting of parameters occurs) e.g. into otherwise stateless HTTP transactions. Without cookies, each retrieval of a web page (technically, each component of a web page) from a web site could be regarded as an isolated event, virtually unrelated to all other views of the site's pages. By returning a cookie to a web server and/or storing it on the user's computer, the browser particularly may provide the server a means of connecting the current page view with prior page views. Typically this may be used to authenticate or identify a registered user of a web site as part of their first login process or initial site registration without requiring them to sign in again every time they access that site. Other uses are maintaining a "shopping basket" of goods selected for purchase during a session at a site, site personalization (presenting different pages to different users), and tracking a particular user's access to a site. A cookie may be set either by a web server via a PHP script, a CGI script or by a script, such as JavaScript, running in a web browser. In other words, a cookie may be regarded as data sent to the computer of a user and/or stored in a memory space of the computer and/or server by a web server that at least partly records or documents actions of a user on a certain URL, web site or list of web sites. When visiting the site after being sent the cookie, the site will load certain pages according to the information stored or defined in the cookie. For example, some sites may remember information like the user name and password, so that the user does not have to re-enter it each time the user visits the site.

Moreover, cookies allow to have user-specific or personalized web sites like "My Excite" or "My Yahoo," where the user can customize what is displayed on the page.

As an example, a user can have several mail accounts on the same web-based mail service. The cookie manager 140 thus stores a plurality of cookies (Cookie1, Cookie2, Cookie3, ...) relating to the web-based mail service specified by its URL in the example. The cookies may e.g. contain information as e.g. the login and password for the respective identity. When the user accesses the web-based mail service, he can select which of the cookies, and thus which identity, shall be used for the session as will be described later.

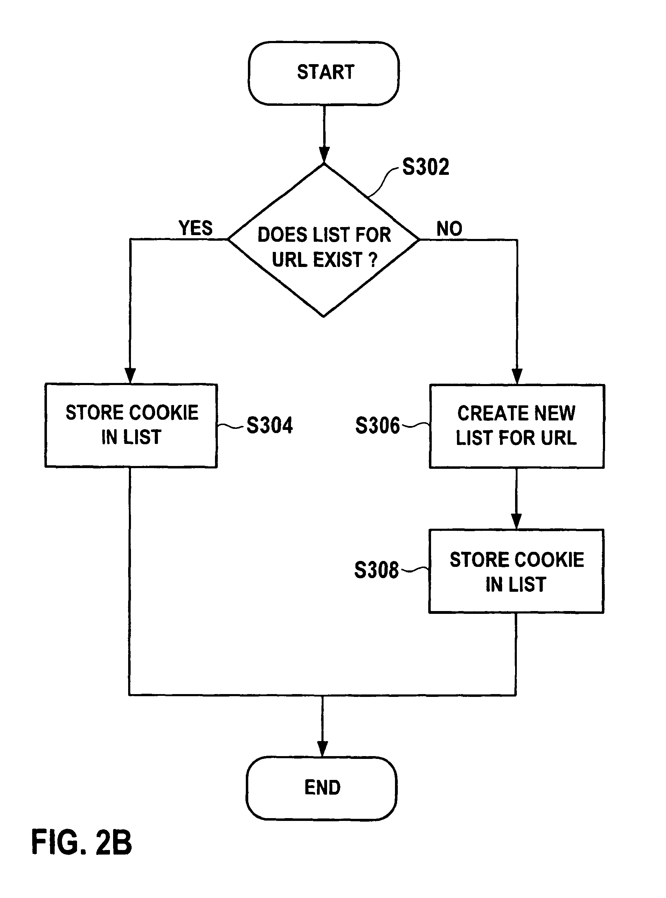

A schematic representation of a method for managing information related to a user will be described in detail with reference to Fig. 2A and 2B.

Fig. 2A shows a schematic representation of a method for managing information related to a user according to an example of the present invention and Fig. 2B shows detailed representation of the step of adding a cookie of Fig. 2A.

When a user accesses a web-based application related to a specific web server 110 for the first time (or after expiration or after reset), the web server 110 of the web-based application sends a cookie to the web browser 130 (Step S10). The cookie may contain user-related information and can be used for user authentification to web-based application. E.g. when the user has input his login and password for the web-based application, this login and password may be contained in the cookie, in particular in an encrypted way.

The web browser 130 receives the cookie and sends or forwards the cookie to the cookie manager 140 so that the cookie can be registered in the client device 120, and in particular the cookie manager 140 (Step S20).

In the cookie manager 140 a routine 'addCookie()' may be started for registering the cookie (Step S30). A detailed description of the method steps provided in routine 'addCookie()' will be described with reference to Fig. 2B.

In Step S302, it is determined whether a list 150 for the web-based service related to the received cookie already exists. If a list 150 for the web-based service already exists in the database ("YES" in Step S302), the cookie is added into the list 150 as a further entry and stored (Step S304). If a list 150 for the web-based service does not yet exist (or has been reset or has expired) in the database ("NO" in Step S302), a new list 150 for the web-based service is created (Step S306) and the cookie is stored in the newly created list (Step S308).

It may be provided that the user can give the cookie which is saved to the database a particular label, e.g. the name of the identity it represents (not shown).

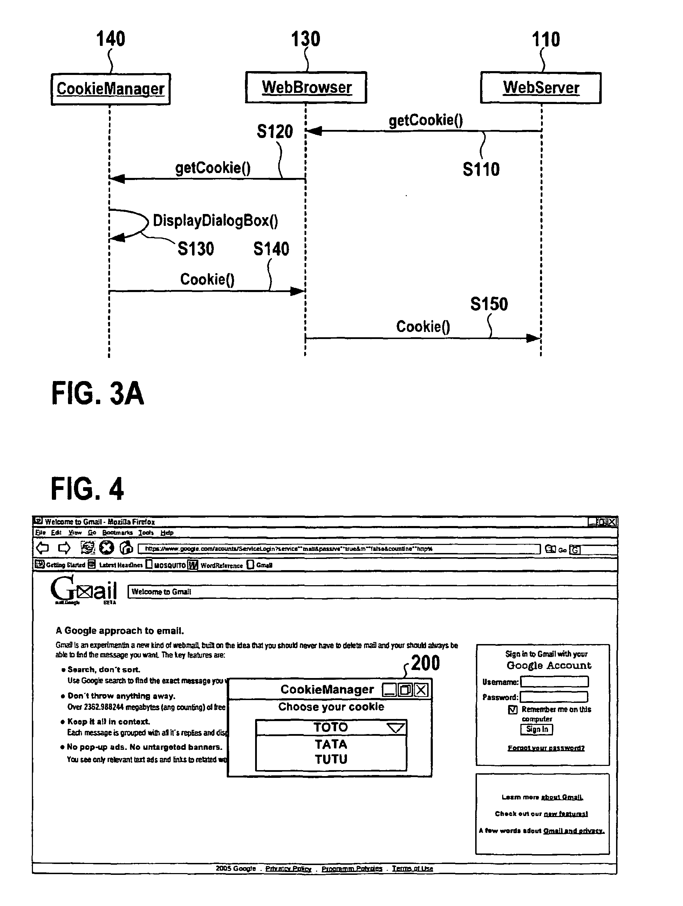

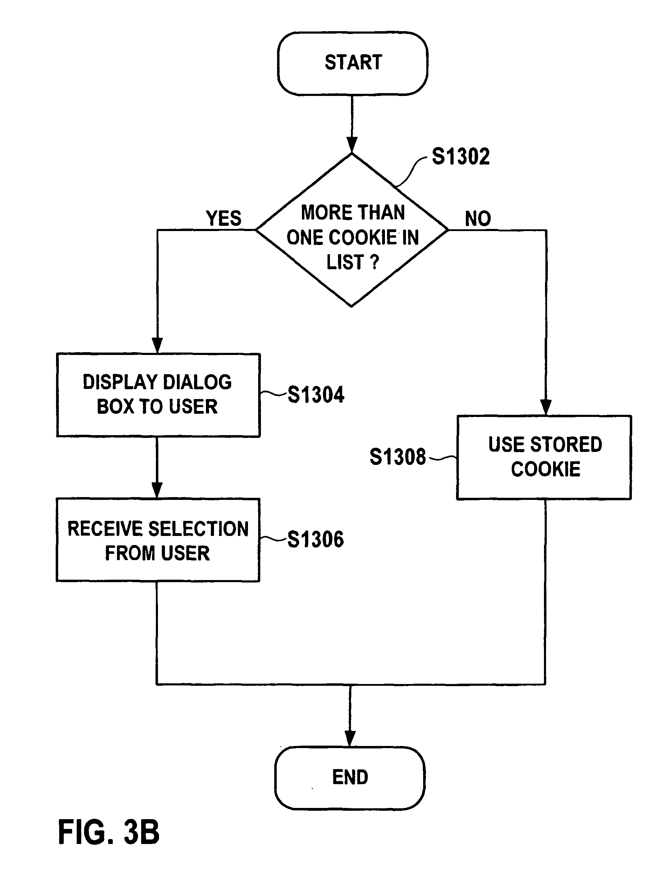

A schematic representation of a method for retrieving information related to a user will be described with reference to Fig. 3A and 3B.

If a user accesses the web-based service the next time, the web server 110 sends a request for the cookie related to the web-based application the user would like to use to the web browser 130 (Step S110). The web browser 130 may send a request to the cookie manager 140 to get or retrieve the respective cookie (Sep S 120).

The cookie manager 140 may start a routine 'DispIayDialogBox()' to determine the cookie to be used (Step S130). A detailed description of the method steps of routine 'DispIayDialogBox()' will be described with reference to Fig. 3B.

In Step S1302 it is determined whether there are more than one cookie stored in the cookie list 150 relating to the URL of the web-based service. If there are more than one cookie stored ("YES" in Step S1302), the cookie manager 140 displays to the user a dialog box or graphic user interface element showing the cookies and/or data or information related thereto stored or provided for the respective web-based service (Step S1304). If the user had given labels to the cookies, the cookie manager 140 may display the labels (not shown). The user then chooses the cookie representing the identity he would like to use and the selection is received in the cookie manager 140 (Step S1306).

If only one cookie relating to the URL of the web-based service is stored ("NO" in Step S1302), this cookie is used without requesting the user to make a selection (Step S1308). However, it may be provided that the dialog box also displayed to the user in this case.

The cookie manager 140 may send the selected cookie to the web browser 130 (Step S140). Subsequently, the web browser 130 sends the selected cookie to be used in the present session to the web server (Step S150).

Fig. 4 shows an exemplary display view when applying the method of Fig. 3A.

In the given example, the user would like to access a web-based mail application. After having entered the respective URL into the web-browser, a pop-up window 200 as an exemplary dialog box is displayed to user. The user can now select which cookie he would like to use for the present session. In the shown example, three cookies labeled "TOTO", "TATA" and "TUTU" are stored and displayed for the web-based service.

The method described with reference to Fig. 3A may be applied in combination with the method described with reference to Fig. 2A.

The user may arbitrarily ad and/or remove one, more or all cookies at any time.

The methods described above can be used with any kind of web-based application in which cookies are used. In particular it can be used with web-based email applications or web-based forum applications.

The invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks such as internal hard disks and removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or an Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

### List of reference numerals

- 100: client-server environment
- 110: web server
- 120: client device
- 130: web browser
- 140: cookie manager
- 150: list

## Claims

1. Method for managing information related to a user in a client-server environment comprising a client computer (120) and a server computer (110),
wherein the client computer (120) executes the steps of
- receiving a first cookie sent from a server computer (110) related to a web-based service, said first cookie defining a first identity;
- storing the first cookie related to the web-based service;
- receiving at least one further cookie sent from the server computer (110) related to the same web-based service, said at least one further cookie defining at least one further identity, respectively;
- storing the at least one further cookie related to the same web-based service,
**characterised in that** the cookies related to the same web-based service are stored in a list (150) for each web-based service.

2. Method according to claim 1, comprising the step of providing each cookie related to the same web-based service with a label.

3. Method according to claim 2, wherein the step of providing each cookie related the same web-based service with a label comprises a step of receiving the label form the user.

4. Method according to anyone of the preceding claims, wherein the step of storing the first cookie comprises a step of creating a new list (150) for the web-based service the first cookie is related to.

5. Method according to claim 4, wherein the step of storing the at least one further cookie comprises for each cookie the step of creating a new entry in the list (150) for the web-based service.

6. Method according to anyone of the preceding claims, further comprising the steps of
- receiving from a server computer (110) related to a web-based service a request for a cookie;
- retrieving the stored cookies related to the web-based service;
- displaying the retrieved cookies related to the web-based service for selection to the user;
- receiving a selection of a cookie from the user;
- sending the selected cookie to the server computer (110).

7. Computer-readable storage medium storing a computer program containing computer readable instructions which, when loaded and executed in a suitable client/server environment, performs a method according to anyone of the preceding claims.

8. Computer program product containing computer readable instructions which, when loaded and executed in a suitable client/server environment, performs a method according to anyone of claims 1 to 6.

9. Apparatus for managing information related to a user, comprising:
- a web browser (130);
- a cookie managing component (140) for managing cookies,
wherein the cookie managing component (140) comprises:
- a receiving/sending component for receiving a first cookie sent from a server computer (110) related to a web-based service and at least one further cookie sent from the server computer (110) related to the same web-based service, said first cookie defining a first identity and said at least one further cookie defining at least one further identity, respectively;
- a memory for storing the first cookie related to the web-based service and for storing the at least one further cookie related to the same web-based service
**characterised in that** said memory is adapted to store the cookies related to the same web-based service in a list (150) for each web-based service.

10. Apparatus according to claim 9, wherein
- the receiving/sending component is adapted for receiving from a server computer (110) related to a web-based service a request for a cookie;
- the cookie-managing component (140) is adapted for retrieving the stored cookies related to the web-based service, displaying the retrieved cookies related to the web-based service for selection to the user and receiving a selection of a cookie from the user; and
- the receiving/sending component is adapted for sending the selected cookie to the server computer (110).

## Patentansprüche

1. Verfahren zum Verwalten von Informationen bezüglich eines Benutzers in einer Client-Server-Umgebung, die einen Client-Computer (120) und einen Server-Computer (110) umfasst, wobei der Client-Computer (120) die Schritte ausführt:
- Empfangen eines ersten Cookies, das von einem Server-Computer (110) bezüglich eines Web-basierten Dienstes gesendet wird, wobei das Cookie eine erste Identität definiert;
- Speichern des ersten Cookies, das den Web-basierten Dienst betrifft;
- Empfangen zumindest eines weiteren Cookies, das von dem Server-Computer (110) bezüglich desselben Web-basierten Dienstes gesendet wird, wobei das zumindest eine weitere Cookie zumindest eine weitere Identität definiert;
- Speichern des zumindest einen weiteren Cookies, das denselben Web-basierten Dienst betrifft,
**dadurch gekennzeichnet, dass** die Cookies, die denselben Web-basierten Dienst betreffen, in einer Liste (150) für jeden Web-basierten Dienst gespeichert werden.

2. Verfahren nach Anspruch 1, umfassend den Schritt des Versehens jedes Cookies, das denselben Web-basierten Dienst betrifft, mit einem Label bzw. Etikett.

3. Verfahren nach Anspruch 2, wobei der Schritt des Versehens jedes Cookies, das denselben Web-basierten Dienst betrifft, mit einem Label bzw. Etikett einen Schritt des Empfangens des Labels bzw. Etiketts von dem Benutzer umfasst.

4. Verfahren nach einem der vorhergehenden Ansprüche, wobei der Schritt des Speicherns des ersten Cookies einen Schritt des Erstellens einer neuen Liste (150) für den Web-basierten Dienst umfasst, den das erste Cookie betrifft.

5. Verfahren nach Anspruch 4, wobei der Schritt des Speicherns des zumindest einen weiteren Cookies für jedes Cookie den Schritt des Erstellens eines neuen Eintrags in die Liste (150) für den Web-basierten Dienst umfasst.

6. Verfahren nach einem der vorhergehenden Ansprüche, ferner umfassend die Schritte:
- Empfangen einer Anfrage für ein Cookie von einem Server-Computer (110) bezüglich eines Web-basierten Dienstes;
- Abrufen der gespeicherten Cookies, die den Web-basierten Dienst betreffen;
- Anzeigen der abgerufenen Cookies, die den Web-basierten Dienst betreffen, dem Benutzer zur Auswahl;
- Empfangen einer Auswahl eines Cookies von dem Benutzer;
- Senden des ausgewählten Cookies an den Server-Computer (110).

7. Computerlesbares Speichermedium, das ein Computerprogramm mit computerlesbaren Instruktionen speichert, das, wenn es in eine geeignete Client/Server-Umgebung geladen und ausgeführt wird, ein Verfahren nach einem der vorhergehenden Ansprüche durchführt.

8. Computerprogrammprodukt mit computerlesbaren Instruktionen, das, wenn es in eine geeignete Client-/Server-Umgebung geladen und ausgeführt wird, ein Verfahren nach einem der Ansprüche 1 bis 6 durchführt.

9. Vorrichtung zum Verwalten von Informationen bezüglich eines Benutzers, umfassend:
- einen Web-Browser (130);
- eine Cookie-Verwaltungskomponente (140) zum Verwalten von Cookies, wobei die Cookie-Verwaltungskomponente (140) umfasst:
- eine Empfangs-/Sendekomponente zum Empfangen eines ersten Cookies, das von einem Server-Computer (110) bezüglich eines Web-basierten Dienstes gesendet wird, und zumindest eines weiteren Cookies, das von dem Server-Computer (110) bezüglich desselben Web-basierten Dienstes gesendet wird, wobei das erste Cookie eine erste Identität definiert und das zumindest eine weitere Cookie zumindest eine weitere Identität definiert;
- einen Speicher zum Speichern des ersten Cookies, das den Web-basierten Dienst betrifft, und zum Speichern des zumindest einen weiteren Cookies, das denselben Web-basierten Dienst betrifft,
**dadurch gekennzeichnet, dass** der Speicher angepasst ist, die Cookies, die denselben Web-basierten Dienst betreffen, in einer Liste (150) für jeden Web-basierten Dienst zu speichern.

10. Vorrichtung nach Anspruch 9, wobei
- die Empfangs-/Sendekomponente angepasst ist, eine Anfrage für ein Cookie von einem Server-Computer (110) bezüglich eines Web-basierten Dienstes zu empfangen;
- die Cookie-Verwaltungskomponente (140) angepasst ist, die gespeicherten Cookies, die den Web-basierten Dienst betreffen, abzurufen, die abgerufenen Cookies, die den Web-basierten Dienst betreffen, dem Benutzer zur Auswahl anzuzeigen und eine Auswahl eines Cookies von dem Benutzer zu empfangen; und
- die Empfangs-/Sendekomponente angepasst ist, das ausgewählte Cookies an den Server-Computer (110) zu senden.

## Revendications

1. Procédé pour gérer une information concernant un utilisateur dans un environnement de client/serveur comprenant un ordinateur client (120) et un ordinateur serveur (110), dans lequel l'ordinateur client (120) exécute les étapes consistant à:
- recevoir un premier cookie envoyé depuis un ordinateur serveur (110) associé à un service basé sur le Web, ledit premier cookie définissant une première identité;
- mémoriser le premier cookie associé au service basé sur le Web;
- recevoir au moins un autre cookie envoyé depuis l'ordinateur serveur (110) associé au même service basé sur le Web, ledit au moins un autre cookie définissant respectivement au moins une autre identité;
- mémoriser le au moins un autre cookie associé au même service basé sur le Web,
**caractérisé en ce que** les cookies associés au même service basé sur le Web sont mémorisés dans une liste (150) pour chaque service basé sur le Web.

2. Procédé selon la revendication 1, comprenant l'étape de fournir chaque cookie associé au même service basé sur le Web avec une étiquette.

3. Procédé selon la revendication 2, dans lequel l'étape de fournir chaque cookie associé au même service basé sur le Web avec une étiquette comprend une étape de réception du formulaire d'étiquette de l'utilisateur.

4. Procédé selon l'une quelconque des revendications précédentes, dans lequel l'étape de mémoriser le premier cookie comprend une étape de créer une nouvelle liste (150) pour le service basé sur le Web auquel le premier cookie est associé.

5. Procédé selon la revendication 4, dans lequel l'étape de mémoriser le au moins un autre cookie comprend l'étape de créer une nouvelle saisie dans la liste (150) pour le service basé sur le Web pour chaque cookie.

6. Procédé selon l'une quelconque des revendications précédentes, comprenant en outre les étapes consistant à:
- recevoir une requête pour un cookie depuis un ordinateur serveur (110) associé à un service basé sur le Web;
- récupérer les cookies mémorisés associés au service basé sur le Web;
- afficher les cookies récupérés associés au service basé sur le Web pour la sélection à l'attention de l'utilisateur;
- recevoir une sélection d'un cookie depuis l'utilisateur;
- envoyer le cookie sélectionné à l'ordinateur serveur (110).

7. Support de mémorisation lisible par un ordinateur, mémorisant un programme d'ordinateur contenant des instructions lisibles par un ordinateur qui, lorsqu'elles sont chargées et exécutées dans un environnement approprié de client/serveur, accomplissent un procédé selon l'une quelconque des revendications précédentes.

8. Produit de programme d'ordinateur contenant des instructions lisibles par un ordinateur qui, lorsqu'elles sont chargées et exécutées dans un environnement approprié de client/serveur, accomplissent un procédé selon l'une quelconque des revendications 1 à 6.

9. Appareil pour gérer une information concernant un utilisateur, comprenant:
- un explorateur (browser) de Web (130);
- un composant de gestion des cookies (140) pour gérer des cookies;
dans lequel le composant de gestion des cookies (140) comprend:
- un composant de réception/d'émission pour recevoir un premier cookie envoyé depuis un ordinateur serveur (110) associé à un service basé sur le Web et au moins un autre cookie envoyé depuis l'ordinateur serveur (110) associé au même service basé sur le Web, ledit premier cookie définissant une première identité et ledit au moins un autre cookie définissant respectivement au moins une autre identité;
- une mémoire pour mémoriser le premier cookie associé au service basé sur le Web et pour mémoriser le au moins un autre cookie associé au même service basé sur le Web, **caractérisé en ce que** ladite mémoire est adaptée pour mémoriser les cookies associés au même service basé sur le Web dans une liste (150) pour chaque service basé sur le Web.

10. Appareil selon la revendication 9, dans lequel:
- le composant de réception/d'émission est adapté pour recevoir une requête pour un cookie depuis un ordinateur serveur (110) associé à un service basé sur le Web;
- le composant de gestion des cookies (140) est adapté pour récupérer les cookies mémorisés associés au service basé sur le Web, afficher les cookies récupérés associés au service basé sur le Web pour la sélection à l'attention de l'utilisateur et recevoir une sélection d'un cookie depuis l'utilisateur; et
- le composant de réception/d'émission est adapté pour envoyer le cookie sélectionné à l'ordinateur serveur (110).
